# EUROPEAN PATENT APPLICATION

(11) **EP 4 825 908 A1**
(43) Date of publication of application: **21.10.2026**
(21) Application number: 25382398.3
(22) Date of filing: 16.04.2025
(51) Int. Cl.: C08L 5/04, C09K 5/14, C09K 5/18, F28D 20/00

(54) **COMPOSITION FOR HEAT TRANSFER AND HEAT EXCHANGER**

(71) Applicant: Nido Constructech, S.L., 28011 Madrid (ES)
(72) Inventor: GOMEZ GARCIA, Karina Natalia, 08029 BARCELONA (ES); SEGUEL AVELLO, Aldo Luis, JERSEY CITY, 07310 (US)
(74) Representative: Galbaian S.Coop.

(57) **Abstract**

Composition for heat transfer that comprises a gel (10) formed by crosslinked polymers, characterised in that the composition comprises at least one microorganism (20,21,22) that is thermophile, psychrophile or mesophile, and microorganism growing medium, wherein the microorganism is alive or in a dormant state. Heat exchanger that comprises the composition.

## Description

### TECHNICAL FIELD

The present invention relates to compositions for heat transfer and heat exchangers.

### PRIOR ART

Energy saving and efficiency in heating or cooling processes has become a challenge.

The use of fossil resources has become a problem due to the negative impact on the environment. For example, this challenge can be found in heating or cooling houses or buildings where due to extreme climate changes, the need for equipment, devices and/or structural materials for buildings that allow a more efficient heating or cooling processes of houses is required. Low power or energy consumption and sustainability and recyclability of materials are also requirements that are increasingly being asked and demanded by citizens and governments.

Existing energy efficiency and thermal control technologies are mainly based on static insulation materials and conventional air conditioning systems.

Other existing energy efficient technologies can improve thermal regulation, but some may use synthetic materials or chemicals that are harmful to the environment, which can have a negative impact on sustainability.

EP0883660B1 discloses a device for storing and gradually releasing heat or cold comprising a high heat capacity composition comprising a gel of a cross-linked hydrophilic polymer.

### DISCLOSURE OF THE INVENTION

The object of the invention is to provide a composition for heat transfer and a heat exchanger, as defined in the claims.

A first aspect of the invention relates to a composition for heat transfer that comprises a gel formed by crosslinked polymers wherein the composition comprises at least one microorganism that is thermophile, psychrophile or mesophile, the microorganism being alive or in a dormant state. The composition also comprises a microorganism growing medium.

A second aspect of the invention relates to a heat exchanger that comprises the composition of the invention, wherein the microorganism gives rise to an exothermic or endothermic reaction due to a physical or metabolic processes on the microorganism.

A third aspect of the invention relates to the use of the composition as a thermal regulator of an environment.

Many existing energy-efficient technologies can improve thermal regulation, but some may use synthetic materials or chemicals that are harmful to the environment, which can have a negative impact on sustainability. The invention overcomes these disadvantages. The composition and the heat exchanger use the microorganism as a sensor. The microorganism functions as a biological agent which, on perceiving thermal, physical or chemical variations, is activated and triggers exothermic (heat-generating) or endothermic (heat-absorbing) reactions. The composition stores, absorbs or releases the heat to the medium or material that is in contact with the composition. These reactions allow for example the regulation of the ambient temperature, as the composition and the heat exchanger are capable of releasing or absorbing heat as necessary to maintain a stable or desired temperature.

The invention is applicable to air conditioning systems, temperature control systems, temperature protection textiles, materials for lithium batteries, household appliances or servers for instance.

These and other advantages and features of the invention will become apparent in view of the figures and the detailed description of the invention.

### DESCRIPTION OF THE DRAWINGS

Figure 1 shows a cutaway view of the heat exchanger according to one embodiment of the invention.
Figure 2 shows a process of exothermic reactions of a composition comprising a consortium of microorganism, each microorganism having a different activation threshold temperature.

### DETAILED DISCLOSURE OF THE INVENTION

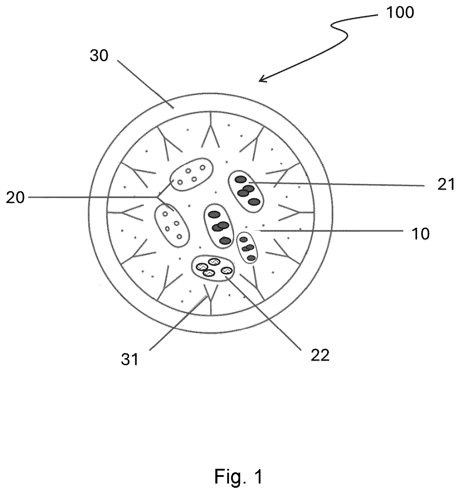

Figure 1 shows a composition 100 for heat transfer that comprises a gel 10, preferably an hydrogel, formed by crosslinked polymers, characterised in that the composition comprises at least one microorganism 20,21,22 that is thermophile 20, psychrophile 21 and/or meshophile 22, and microorganism growing medium shown in the figure mixed within the gel 10, wherein the microorganism is alive or in a dormant state. The composition comprises a growing medium which comprises nutrients adapted for each type of microorganism.

The composition works thanks to the activity of heat-generating microorganisms according to their metabolic efficiency in defined thermal ranges. These microorganisms are embedded in the gel matrix that provides structural support, moisture and nutrients. Heat generation occurs in response to a physical or mechanical parameter or a chemical or biochemical element that activates exergonic metabolic pathways.

In one embodiment, the composition comprises thermophile microorganism selected from *Rhodothermaceae, Bacillaceae, Thermaceae, Aquificaceae, Hydrogenobacteraceae, Micromonosporaceae* or *Rhodothermacea.*

In one embodiment, the composition comprises mesophile microorganism is selected from *Bacillaceae, Pseudomonadaceae, Desulfovibrionaceae, Lactobacillaceae, Saccharomycetaceae, Shewanellaceae, Geobacteraceae, or Acidithiobacillaceae,* more preferably, *Bacillus subtilis, Pseudomona aeruginosa, Desulfovibrio desulfuricans, Geobacillus, Lactobacillus sp., Saccharomyces cerevisiae, Shewanella sp., Geobacter sp., Acidithiobacillus ferrooxidans.*

In one embodiment the composition comprises halophile microorganism, preferably selected from *Halobacteriaceae* or *Rhodothermaceae.*

In one embodiment the composition comprises psychrophiles, preferebly selected from *Pantoea agglomerans* and *Pantoea ananatis.*

In the context of the invention, microorganism growing above 45 °C and below 20 °C are called thermophiles and psychrophiles, respectively, the rest are called mesophiles.

In the context of the invention, halophile microorganism are the ones that retains its activity or growths at high salt concentrations.

One characteristic of these microorganism is that all of them are thermotolerant, at least in a subrange of a temperature rante between 4°C and 85°C. In the context of the invention, thermotolerant microorganism relates to any microorganism that retains its activity at the given temperature of the composition.

In a preferred embodiment, the composition comprises more than one type of microorganism, each microorganism 20,21,22 having different response to a physical or mechanical parameter or chemical or biochemical element that activate exergonic metabolic pathways, preferably, with an optimum growing temperature different to each other. Thus, in one embodiment, the composition comprises a combination of microorganism or a consortium of microorganism selected from microorganism that are thermophiles 20 and microorganism that are meshophile 22. In another embodiment, the composition comprises a combination of microorganism or a consortium of microorganism selected form microorganism that are meshopile 22 and psychrophiles 21. In another embodiment, the composition comprises a combination of microorganism or a consortium of microorganism selected from thermophiles 20 and psychrophiles 21. In another embodiment, the composition comprises a combination of microorganism or a consortium of microorganism selected from thermophiles 20, psychrophiles 21 and meshopile 22.

The following table describes the microorganism, its activation threshold temperature (microorganism growths temperature), death or inactivation temperature (where microorganism growth stops, or death occurs) and main heat generation mechanism. The selection of the microorganism will depend on the needed temperature or range of temperature to be released or absorbed.

| **Species** | **Family** | **Activation Thresh-old Temperature °C** | **Death/Inactivation Temperature** | **Heat Generation Mecha-nisms** |
|---|---|---|---|---|
| *Acidithiobacillus ferrooxidans* | *Acidithiobacillaceae* | 15 -30°C (Optimum 30 °C) | Does not grow >40 °C | Acidophilic chemolithotrophy: Fe²⁺ and sulfur oxidation. |
| *Bacillus subtilis* | *Bacillaceae* | 15 -35 °C (Optimum: 30-35 °C) | No growth >50 °C; Vegetative cells die 50°C; Spores survive ≥100 °C | Aerobic respiration (oxidative phosphorylation; proton leakage that dissipates energy as heat). In anaerobiosis may ferment (e.g. 2,3-butanediol). |
| *Desulfavibrio desulfuricans* | *Desulfovibrionaceae* | 15 -38°C (Optimum 35-38 °C) | Does not grow >43 °C; Dies >~50 °C | Anaerobic sulfate reductive respiration (SO₄²- → H₂S using H₂ or organics as donors). |
| *Geobacillus sp.* | *Bacillaceae* | 55-65 °C | Does not grow <30 °C or >75 °C; Dies >80 °C; Spores survive 100°C | Aerobic respiration at high temperature. Some strains can ferment sugars under microaerobiosis. |
| *Geobacillus stearothermophilus* | *Bacillaceae* | 45-70 °C (Optimum 55-65 °C) | No growth >75 °C; Vegetative cells die >75-80 °C; Spores survive ≥100 °C | Aerobic respiration and fermentation; heat-stable enzyme production. |
| *Geobacter sulfurreducens* | *Geobacteraceae* | 20 -30°C (Optimum 30 °C) | Does not grow >37 °C | Anaerobic metal-reductive respiration with external electron transfer. |
| *Halobacterium salinarum* | *Halobacteriaceae* | 30-50 °C (Optimum ~42 °C) | No growth <25 °C or >55 °C; Dies >60 °C | Aerobic respiration with bacteriorhodopsin-driven proton gradients. |
| *Hydrogenobacter thermophilus* | *Hydrogenobacteraceae* | 45-70 °C (Optimum 70 °C) | Does not grow <40 °C or >80 °C; Dies out of range | Oxidizes H₂, sulfur; fixes CO₂ via reverse TCA cycle. |
| *Lactobacillus sp.* | *Lactobacillaceae* | 20-45 °C (Optimum ~30-45 °C) | Dies 60 °C | Homofermentative anaerobic lactic fermentation (glucose → 2 lactate + heat). |
| *Pseudomonas aeruginosa* | *Pseudomonadaceae* | 4-42 °C (Optimum ~37 °C) | Does not grow >42 °C; Dies >~50 °C | Aerobic respiration (heat-coupled proton-leaking e-transport chain). Anaerobic denitrifying respiration (nitrate → N₂). |
| *Rhodothermus marinus* | *Rhodothermaceae* | 45-77 °C (Optimum ~65 °C) | No growth >77 °C; Dies >80 °C | Thermophilic aerobic respiration of sugars/proteins. |
| *Saccharomyces cerevisiae* | *Saccharomycetaceae* | 10-30 °C (Optimum 30°C) | Dies >45 °C | Alcoholic fermentation in anaerobiosis. Aerobic respiration with less heat per substrate. |
| *Salinibacter ruber* | *Rhodothermaceae* | 30-50 °C (Optimum ~37-45 °C) | No growth >55 °C; Dies >60 °C | Aerobic heterotrophic metabolism with thermotolerant pathways. |
| *Shewanella oneidensis* | *Shewanellaceae* | 4-30 °C (Optimum 25-30 °C) | No growth >35 °C; Dies >40 °C | Moderate aerobic respiration; anaerobic respiration with metals (Fe(III), Mn(IV)). |
| *Thermobifida fusca* | *Micromonosporaceae* | 30-55°C (Optimum: 55°C) | Dies >60 °C; Does not grow <25 °C | Aerobic polysaccharide degradation (e.g., cellulose). Polyphosphate metabolism. |
| *Thermocrinis ruber* | *Aquificaceae* | 70 °C (Optimum 80-85°C) | Dies >~89 °C | Aerobic chemolithotrophy; oxidizes H₂, thiosulfate, sulfur, and phosphite. |
| *Thermus aquaticus* | *Thermaceae* | 65-70 °C | Does not grow >79-80 °C; Dies >85 °C | Aerobic heterotrophic (thermophilic) respiration. Many species also denitrify nitrate. |
| *Thermus thermophilus* | *Thermaceae* | 50-80 °C (Optimum 65-75 °C) | No growth >85 °C; Dies >90 °C | Aerobic respiration with proton leakage; some denitrify under microaerobiosis. |
| *Pantoea agglomerans* | *Enterobacteri aceae* | 4°-42° (Optimum 10-30 °C) | No growth >40 °C; | Facultative anaerobic metabolism; primarily aerobic respiration under normoxic conditions, with moderate heat dissipation during oxidative phosphorylation. Can also ferment under oxygen-limited environments. |
| *Pantoea ananatis.* | *Enterobacteriaceae* | 15.5-30°C | No growth ≥30 °C; | Facultative anaerobe; utilizes aerobic respiration and mixed acid fermentation pathways. Generates heat through metabolic oxidation of sugars and amino acids. |

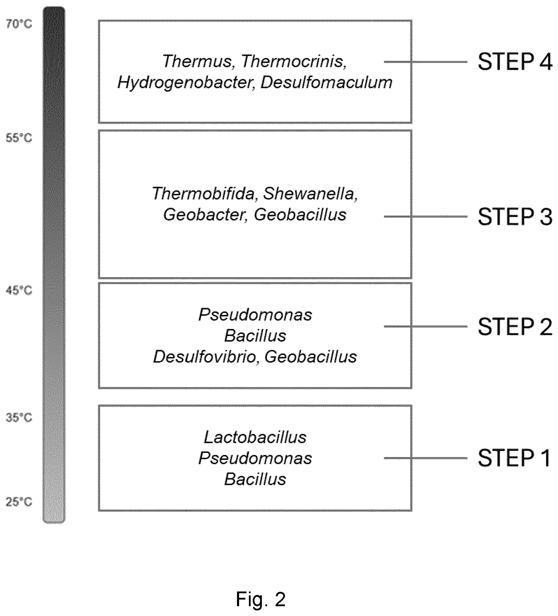

Figure 2 shows an example of a composition with a consortium of microorganisms, each microorganism having a different activation threshold temperature. The figure shows that the growing of each type of bacteria causes an increase of the temperature of the composition, said increase given rise to the growing of the next type of bacteria.

Mesophilic microorganisms of *Lactobacillus, Pesudomonas* and *Bacillus* are activated at a temperature of 25-35°C (Step 1). The growing of these microorganisms causes the increase of the temperature of the composition causing the growing of the microorganism Desulfovibrio and *Geobacillus* (Step 2). The growing of theses microorganisms causes the increase of the temperature of the composition to 45°C. The latter temperature causes the activation of the next consortium of microorganisms (Step 3), where *Thermobifida, Shewanella* and *Geobacter* start growing causing the increase of the temperature of the composition to 55°C, which activates the growing of microorganisms (Step 4) of *Thermus, Thermocrinis, Hydrogenobacter* and *Desulotomaculum,* increasing the temperature of the composition to 70°C.

The gel matrix is formulated with natural and/or synthetic polymers (e.g. alginate, polyacrylamide), optimized to maintain thermal stability and relative humidity. It allows controlled diffusion of gases and nutrients, facilitating aerobic and anaerobic metabolism. Heat generation is a consequence of exergonic metabolic reactions, such as respiration and fermentation. The gel structure acts as a conductor and selective insulator, adapting to thermal variations without degrading.

In one embodiment, the composition comprises a viscosity between 500 and 5000 mPa-s. This viscosity allows microbial mobility and heat transfer of the composition.

In one embodiment, the composition comprises a thermal conductivity of 0.4 - 0.7 W/mK. This thermal conductivity facilitates efficient heat transfer.

In one embodiment, the composition comprises a water retention rate between 70% - 90%. This content of water maintains microbial viability and to increase thermal properties of the gel.

The water retention rate is measured by a gravimetric method, wherein the weight of the hydrated hydrogel is compared before and after a controlled dehydration period under defined temperature and humidity conditions.

In one embodiment, the composition comprises a pH between 5,5 and 7,5. This pH range is optimal for microbial growth and activity.

In one embodiment, the composition comprises a oxygen permeability ≥ 10⁻¹¹ m²/s, ensuring an adequate oxygen diffusion.

The oxygen permeability is measured by using a standard diffusion cell method based on Fick's law, wherein the oxygen transmission rate through the hydrogel is quantified under controlled temperature and humidity. This may be carried out using an oxygen-permeation analyser or a dissolved oxygen probe in a Franz diffusion cell setup

In one embodiment, the composition comprises an elasticity of 100 - 1,000 Pa for a structural stability of the composition.

The elasticity is measured by oscillatory rheology using a rheometer, wherein the storage modulus (G') is determined under small-amplitude oscillatory shear within the linear viscoelastic region (LVR). This test is performed at controlled temperature and frequency, and follows standard protocols established in the art for hydrogel characterization. All these features being at a temperature of use of the composition which ranges between 4°C and 80°C, preferably between 25 °C and 75°C, more preferably between 25°C and 65°C.

In one embodiment, the composition comprises a crosslinked polymer which is a polysaccharide, preferably selected from alginate, carrageenan nanocellulose, guar gum, xanthan gum or a combination thereof.

In one embodiment, the composition comprises a polymer crosslinking reagent selected from inorganic salts, preferably AlCl₃ (aluminum chloride). CaCl₂ (calcium chloride) or CaSO₄ (calcium sulphate). In one embodiment, the composition comprises a photo-crosslinking reagents selected from methacrylate, 2-hydroxy-4'-(2-hydroxyethoxy)-2-methylpropiophenone or a combination thereof.

In one embodiment, the composition comprises glycerol and/or potassium sorbate.

In one embodiment the composition comprises by-products of the metabolism of the microorganism of the composition.

Some of the functions or roles of the components of the composition are detailed below. The specific ingredient is listed as an example and not as a limitative example for each function or role within the composition.

Alginate:
Derived from brown algae, alginate forms a gel when exposed to divalent cations (e.g., Ca²⁺ from CaCl₂ or CaSO₄).
Provides structural integrity and mechanical strength.
Creates a biocompatible and porous network that can encapsulate active agents or microorganisms.
Controls the viscosity and flow behaviour of the gel before crosslinking.

Nanocellulose:
Improves mechanical strength and elasticity of the gel.
Enhances viscosity and shear-thinning behaviour, making the gel easier to apply while maintaining structure.
Provides a reinforcing network that improves the gel's durability and stability.

Guar gum:
Increases the viscosity of the pre-gel solution, aiding in uniform dispersion of other ingredients.
Improves texture and stability by preventing phase separation.
Provides synergistic effects when combined with xanthan gum to create a more elastic and stable network.

Carrageenan:
Enhances viscosity and provides a gel-like consistency, especially in combination with alginate.
Improves texture and stabilizes the gel matrix.
Can act as a secondary gelling agent, offering additional mechanical stability to the gel.

Xanthan Gum:
Stabilizer and synergistic thickener.
Provides pseudoplastic (shear-thinning) behaviour, aiding in easier application. Enhances the viscosity and consistency of the gel.
Works synergistically with guar gum to create a more elastic and stable gel matrix. Improves suspension of any dispersed particles or microorganism within the gel.

Sodium Gluconate
Calcium chelating agent and pH regulator.
Acts as a chelating agent that controls the rate of calcium ion release, thereby modulating the crosslinking process.
Prevents premature gelation of alginate during formulation by temporarily binding free calcium ions.
Stabilizes pH and prevents calcium precipitation, ensuring a more uniform gel network.

CaCl₂ (Calcium Chloride) or CaSO₄ (Calcium Sulphate)
Crosslinking agent.
Provides calcium ions (Ca²⁺) that induce ionic crosslinking of alginate chains.
CaCl₂ results in faster gelation, creating a more brittle and less porous gel.
CaSO₄ leads to slower and more controlled gelation, forming a more homogeneous and stable gel network.
Choice of calcium source affects the texture, porosity, and mechanical properties of the gel.

Glycerol
Humectant and plasticizer.
Maintains moisture content in the gel, preventing dehydration over time.
Acts as a plasticizer that increases the flexibility and elasticity of the gel.
Reduces brittleness and enhances the gel's softness and smoothness.

Aluminum chloride (AlCl₃)
Crosslinking and reinforcement agent.
Provides trivalent aluminium ions (Al³⁺) that can form additional ionic bridges with carboxyl groups in alginate and other polysaccharides.
Enhances the mechanical strength and rigidity of the gel by increasing the crosslink density.
Contributes to improved thermal stability and reduced water solubility, making the gel more resistant to deformation under stress.
Works synergistically with calcium-based crosslinkers to reinforce the gel network without significantly affecting biocompatibility.

Methacrylate and 2-Hydroxy-4'-(2-hydroxyethoxy)-2-methylpropiophenone
Photo-crosslinking system for network reinforcement.
Methacrylate groups allow for covalent crosslinking upon UV exposure, creating a secondary, more permanent network within the gel.
The photo initiator (2-Hydroxy-4'-(2-hydroxyethoxy)-2-methylpropiophenone) absorbs UV light and generates free radicals that initiate polymerization of the methacrylate groups. Provides an additional layer of mechanical stability and structural integrity beyond ionic crosslinking alone.
Enhances resistance to mechanical stress, swelling, and degradation, making the gel suitable for long-term or demanding applications.
Allows on-demand curing under light exposure, enabling spatial or temporal control over gel formation.

In one embodiment, the composition comprises:
- Alginate between 1.5% and 3% w/v with respect to the total volume of water in the composition, preferably 2%;
- Calcium sulphate between 0.2% and 3% w/v with respect to the total volume of water in the composition, preferably 0.2%;
- Carrageenan between 0.5% and 1% w/v with respect to the total volume of water in the composition, preferably 0.5%;
- Xantham gum between 0.3% and 1% w/v with respect to the total volume of water in the composition, preferably 0.5%; and
- Sodium gluconate between 0.1% and 1% w/v with respect to the total volume of water in the composition, preferably 0.2%.
- Aluminium chloride (AlCl3) between 0.2% and 1% w/v with respect to the total volume of water in the composition, preferably 0.3%.
- Methacrylate between 0.05% and 1% w/v with respect to the total volume of water in the composition, preferably 0.1%.
- 2-Hydroxy-4'-(2-hydroxyethoxy)-2-methylpropiophenone between 0.1% and 1% w/v with respect to the total volume of water in the composition, preferably 0.12%.

In another embodiment, the composition comprises glycerol between 0.5% and 1% w/v with respect to the total volume of water in the composition, preferably 0.75%, and/or potassium sorbate between 0.05% and 0.5% w/v with respect to the total volume of water in the composition, preferably 0.05%, and/or sodium benzoate between 0.1% and 1.5% w/v with respect to the total volume of water in the composition, preferably 0.1%.

Another aspect of the invention refers to a heat exchanger that comprises the composition of the invention, wherein the microorganism give rise to an exothermic or endothermic reaction due to a physical or metabolic processes on the microorganism.

As a physical process, may be a mechanical and/or environmental stress such as agitation of the composition, changes in hydrostatic pressure and changes in osmolarity of the composition and changes in the temperature and/or hydration/rehydration of the composition.

As a metabolic process, it may be an oxidative phosphorylation ( for example in the case of *Pseudomonas and Bacillus*)*,* lactic and alcoholic fermentation ( for example, in the case of *Lactobacillus*)*,* an anaerobic fermentation ( for example, in the case of *Lactobacillus* or *Saccharomyces*), an anaerobic respiration ( for example, in the case of *Pseudomonas* with the reduction of nitrate or *Desulfovibrio* with the reduction of sulphate), redox reactions with metal (for example, in the case of *Shewanella, Geobacter for* Fe(ll) oxidation, or *Acidithiobacillus* for the oxidation of sulphides) and/or phosphorous thermogenesis ( for example, in the case of *Thermocrinis* or *Hydrogenobacter* for phosphite oxidation or *Thermobifida* for the polyphosphate cycle).

In another embodiment the heat is generated by thermogenesis by phosphorus transformation where thermophilic microorganism (*Thermomonas, B. thermantarcticus, Geobacillus, Thermus, Thermocrinis, Hydrogenobacter, Thermobifida, Caldicellulosiruptor* and/or *Desulfotomaculum, Thermoanaerobacter*) transforms phosphorus compounds and release heat. These routes provide additional warmth in extreme conditions and allow for a more robust response in cold or variable climates.

In another embodiment, the heat is generated by redox reactions induced by microorganism byproducts. In this metabolic line, by-products of microorganism metabolism (such as H₂, H₂S, Fe²⁺ or organic acids) react with surrounding minerals generating highly exergonic oxidation-reduction reactions. For example, oxidation of Fe²⁺ by dissolved oxygen, promoted after microorganism release of ferrous ions. This reaction releases additional heat with a positive enthalpy (ΔH ≈ +150-200 kJ/mol) and negative free energy (ΔG°' ≈ -125 kJ/mol), contributing to the overall temperature of the system. In this way, the composition amplifies its thermal efficiency.

In one embodiment, the composition is encapsulated in a container, preferably in a hermetic container. As shown in figure 1, the composition is encapsulated in a metallic container 30 for example, the metallic container comprising protuberances 31 that increase the surface of contact with the composition of the invention. To capture and transfer the heat generated, the composition is in contact with a heat transfer material, for example, a metallic or a graphenic material that conducts heat from the composition to a thermal store located in contact with the construction system (walls, ceilings or other elements to be cooled or heated). This process allows the controlled release of the accumulated heat, maximizing its use.

The composition and/or the heat exchanger can be integrated into building materials. The composition allows the thermal regulation of the environment, optimizing energy efficiency in buildings by reducing dependence on conventional heating systems. The composition offers a sustainable and adaptable solution to diverse climatic conditions, promoting bioadaptive construction with less environmental impact.

In addition to its application in walls, roofs or insulating panels, the composition and/or the heat exchanger of the invention is highly effective in heat pump piping systems, where it acts as a preheating system for the thermal fluid. By generating and transferring heat through heat conductive materials, the composition reduces the initial energy load required by the system to reach its operating temperature, thus improving the overall efficiency of the equipment. This integration allows extending the use of passive and regenerative technologies in HVAC systems, facilitating their implementation in environments with variable thermal demands and reducing the energy costs associated with air conditioning.

## Claims

1. Composition for heat transfer that comprises a gel formed by crosslinked polymers, **characterised in that** the composition comprises at least one microorganism that is thermophile, psychrophile or mesophile, and a microorganism growing medium, wherein the microorganism is alive or in a dormant state.

2. Composition according to claim 1, wherein the thermophile microorganism is selected from *Rhodothermaceae, Bacillaceae, Thermaceae, Aquificaceae, Hydrogenobacteraceae, Micromonosporaceae* or *Rhodothermacea.*

3. Composition according to claim 1 or 2, wherein the mesophile microorganism is selected from *Bacillaceae, Pseudomonadaceae, Desulfovibrionaceae, Lactobacillaceae, Saccharomycetaceae, Shewanellaceae, Geobacteraceae or Acidithiobacillaceae.*

4. Composition according to any of the preceding claims, wherein the composition comprises psychrophile microorganism, preferably *Pantoea.*

5. Composition according to any of the preceding claims, wherein the composition comprises halophile microorganism, preferably selected from *Halobacteriaceae* or *Rhodothermaceae.*

6. Composition according to any of the preceding claims, wherein the composition comprises more than one type of microorganism, each microorganism having different growing conditions to each other.

7. Composition according to any of the preceding claims, wherein the composition comprises viscosity between 500 and 5000 mPa-s, thermal conductivity between 0.4 - 0.7 W/mK, water content between 70% - 90%, pH between 5,5 and 7,5, oxygen permeability ≥ 10⁻¹¹ m²/s, and elasticity of 100 - 1,000 Pa, such features being at a temperature of use of the composition which ranges between 0 and 85 °C.

8. Composition according to any of the preceding claims, wherein the crosslinked polymer is a polysaccharide, preferably selected from alginate, carrageenan nanocellulose, guar gum, xanthan gum or a combination thereof, and/or a synthetic polymer.

9. Composition according to any of the preceding claims, comprising one or more polymer crosslinking reagents selected from inorganic salts, preferably aluminum chloride, calcium chloride, calcium sulphate or a combination thereof and/or photo-crosslinking reagents, preferably selected from methacrylate or 2-Hydroxy-4'-(2-hydroxyethoxy)-2-methylpropiophenone or a combination thereof.

10. Composition according to any of the preceding claims, wherein the gel comprises glycerol, potassium sorbate, sodium benzoate and/or a combination thereof.

11. Composition according to any of the preceding claims, wherein the composition comprises by-products of the metabolism of the microorganism of the composition.

12. Heat exchanger that comprises the composition according to any of the preceding claims, wherein the microorganism gives rise to an exothermic or endothermic reaction due to a physical or metabolic processes on the microorganism.

13. Heat exchanger according to claim 12, wherein the physical process comprises mechanical and/or environmental stress, preferably agitation, changes in hydrostatic pressure, in osmolarity, temperature and/or hydration/rehydration of the composition.

14. Heat exchanger according to claim 12 or 13, wherein the metabolic process comprises an oxidative phosphorylation, lactic and alcoholic fermentation, anaerobic respiration, redox reactions with metal, phosphorous thermogenesis and/or redox reaction induced by microorganism by-products.

15. Use of the composition according to any of claims 1 to 11 as a thermal regulator.
